## Europäisches Patentamt

## European Patent Office

## Office européen des brevets

(11) Veröffentlichungsnummer: **0 019 004**

**A1**

(12) **EUROPÄISCHE PATENTANMELDUNG**

(21) Anmeldenummer: 79101448.3

(22) Anmeldetag: 11.05.79

(51) Int. Cl.³: **C 03 B 5/027**
**C 03 B 7/08, H 05 B 3/60**

(43) Veröffentlichungstag der Anmeldung:
26.11.80 Patentblatt 80 24

(84) Benannte Vertragsstaaten:
AT CH DE FR GB IT NL SE

(71) Anmelder: Sorg GmbH & Co. KG
Postfach 520
D-8771 Pflochsbach(DE)

(71) Anmelder: Eurofours Sociéte Anonyme
Rue du Couvent 174
B-4500 Jupille s'Meuse(BE)

(72) Erfinder: Pieper, Helmut, Dipl.-Ing.
Buchenstrasse 19
D-8770 Lohr/Main(DE)

(74) Vertreter: Schulze Horn, Stefan et al,
Patentanwälte Dipl.-Ing. Stefan Schulze Horn M SC Dr.
Helmut Hoffmeister Goldstrasse 36
D-4400 Münster(DE)

(54) Elektrisch beheizter Schmelzofen für aggressive Mineralstoffe mit steiler Viskositätskurve.

(57) Elektrisch beheizter Schmelzofen für aggressive Mineralstoffe mit steilen Viskositätskurven, insbesondere bestehend aus einem Gemisch von Flugasche und Kalk sowie möglicherweise Sand für die Zementherstellung, mit einem von einem Stützgerüst gehaltenem Mauerwerk aus feuerfestem Material und Elektroden zur Einleitung von elektrischer Energie in die Schmelze sowie Mitteln zum Auflegen des Gemenges auf die Schmelze, wobei die Elektroden (5) mit erheblicher Länge in die Schmelze (3) ragen, den Boden der Wanne durchdringen und der Ofen einen Grundriß in Form eines Kreises oder regelmäßigen Vielecks mit hoher Eckenzahl aufweist und weiterhin in der Wannenmitte ein mit einem Mitteldurchlaß (7) versehener Auslaß (6) angeordnet ist, der nach oben durch die Schmelze (3) ragt und dessen Auslaufoberkante sich bis dicht unter die Badoberfläche erstreckt.

Fig 1

Croydon Printing Company Ltd.

Elektrisch beheizter Schmelzofen für aggressive Mineralstoffe mit steiler Viskositätskurve

Die Erfindung betrifft einen elektrisch beheizten
Schmelzofen zum Schmelzen von insbesondere aggressiven
Mineralstoffen mit steilen Viskositätskurven, mit
einem von einem Stützgerüst gehaltenem Mauerwerk aus
feuerfestem Material und Elektroden zur Einleitung
elektrischer Energie in die Schmelze und Mitteln zum
Auflegen des Gemenges auf die Schmelze.

Es ist bereits seit langem bekannt, mineralische Stoffe
und insbesondere Gläser in vollelektrisch arbeitenden
Schmelzwannen zu erschmelzen. Diese als konventionell
zu bezeichnenden Schmelzwannen weisen aber den Nachteil auf, daß sie aufgrund ihrer Konstruktion nicht
dazu geeignet sind, hochaggressive Schmelzen zu verarbeiten und insbesondere Gemische aufzuschmelzen, die
einen relativ hohen Schmelzpunkt haben und dabei noch
eine relativ niedrige Leitfähigkeit und sehr steile
Viskositätskurve besitzen. Unter steiler Viskositätskurve ist zu verstehen, daß geringe Temperaturänderungen hohe Viskositätsänderungen bewirken, d. h. im
Gegensatz zu herkömmlichem Glas ändern sich die Viskositätswerte bis zur Dünnflüssigkeit schon bei relativ
geringen Temperaturerhöhungen. Eine weitere Schwierigkeit im Schmelzen der genannten Gemische besteht darin, daß mit rein konventioneller Schmelztechnik, d. h.
mit Brennerheizung nicht gearbeitet werden kann, weil
die Durchstrahlungsmöglichkeiten sehr gering sind, so
daß schon bei geringen Schichtdicken von weniger als
10 cm die Strahlung weitgehend absorbiert wird, untere
Schichten also nicht mehr genügend erwärmt werden können.

Es ist jetzt Aufgabe der Erfindung, eine Schmelzwanne
zum Erschmelzen der vorgenannten schwer zu erschmelzenden Gemische zu schaffen, wobei insbesondere ein Gemisch aus Flugasche, Kalk und evtl. Sand geschmolzen werden soll, das danach frittiert wird.

Der erfindungsgemäße Ofen soll dabei an die an ihn gestellten Aufgaben besonders gut angepaßt sein und es ermöglichen, trotz der Aggressivität der Schmelze eine genügend lange Lebensdauer aufzuweisen und trotz der ungünstigen Viskosität-Temperaturverhältnisse eine Einstellung der gewünschten Schmelzbadtiefe und einen geregelten Schmelzabzug zu ermöglichen. Gemische der vorgenannten Zusammensetzung, wie sie z.B. gemäß der deutschen Patentschrift 2 122 027 zu Zement weiterverarbeitet werden können, nachdem sie aufgeschmolzen wurden, gelten bisher als nicht großtechnisch schmelzbar. Es ist die besondere Aufgabe der Erfindung, einen Schmelzofen zu schaffen, der die großtechnische Schmelze wirtschaftlich ermöglicht, wobei der Ofenbetrieb so sicher sein soll, daß er auch von relativ ungeschultem Personal in Entwicklungsländern betrieben werden kann und wobei die Zusammensetzung des zu erschmelzenden Gemisches von Fall zu Fall unterschiedlich sein kann.

Diese vorgenannte Aufgabe wird bei dem eingangs genannten Ofen erfindungsgemäß dadurch gelöst, daß die Elektroden mit erheblicher Länge in die Schmelze ragen und in der Wannenmitte ein mit einem Mitteldurchfluß versehener Auslaß angeordnet ist, der nach oben in die Schmelze ragt und dessen Oberrand sich bis dicht unter die Badoberfläche erstreckt.

Vorteilhaft weist der Ofen einen Grundriß in Form eines Kreises oder regelmäßigen Vielecks mit hoher Eckenzahl auf und zur Einstellung einer kühleren Randzone der Ofenfüllung zur Schonung des Wandungsmaterials kann die Ofenwandung im Bereich der Schmelze von unten nach oben schräg nach außen und darüber senkrecht verlaufen.

Um eine zu hohe Korrosion im Bereich des Auslasses zu vermeiden, weist dieser in seinem oberen Bereich von außen nach innen schräg nach oben verlaufende Kanäle auf, die oben dicht unterhalb der Schmelzbadoberfläche in einer Mittelbohrung des Auslasses enden. Der Aufbau und die Mittelbohrung sind bis in die Höhe der Drehdecke geführt. Unterhalb des Auslasses können Gas- oder Ölbrenner angeordnet sein, deren Abgase nach oben durch die Mittelbohrung abströmen können. Alternativ können in einer anderen Ausführungsform in der Mittelbohrung hängende Heizelemente angeordnet sein.

Vorteilhaft zur Vermeidung von heißen Zonen in den Randbereichen sind die Elektroden durch den Wannenboden eingeschoben und sind in mindestens zwei konzentrischen Ringen zum Auslaß mit erheblichem Abstand zu diesem und der Außenwandung angeordnet.

Zur Aufgabe des Gemenges in den Bereichen zwischen der Außenwandung und dem Auslaß ist der Ofen vorteilhaft von einer sich drehenden Decke abgedeckt, die Öffnungen und Mittel aufweist, um das Gemenge auf die Schmelze nach den Erfordernissen verteilt aufzugeben und die Drehdecke kann vorteilhaft eine Reparatur des Auslasses ohne eine Entfernung der Drehdecke erlaubend oberhalb der Abdeckung des Auslasses ein leicht entfernbares Mittelteil ohne Anschluß an die Beschickungsmittel aufweisen.

Das Prinzip der genannten Drehdecke wird im einzelnen in der europäischen Patentanmeldung 78 200 395.8, Anmelderin Sorg GmbH & Co. KG, näher beschrieben, so daß auf eine ins Einzelne gehende Beschreibung verzichtet werden kann.

Im folgenden wird ein Ausführungsbeispiel der Erfindung anhand von Zeichnungen näher beschrieben. Es zeigen:

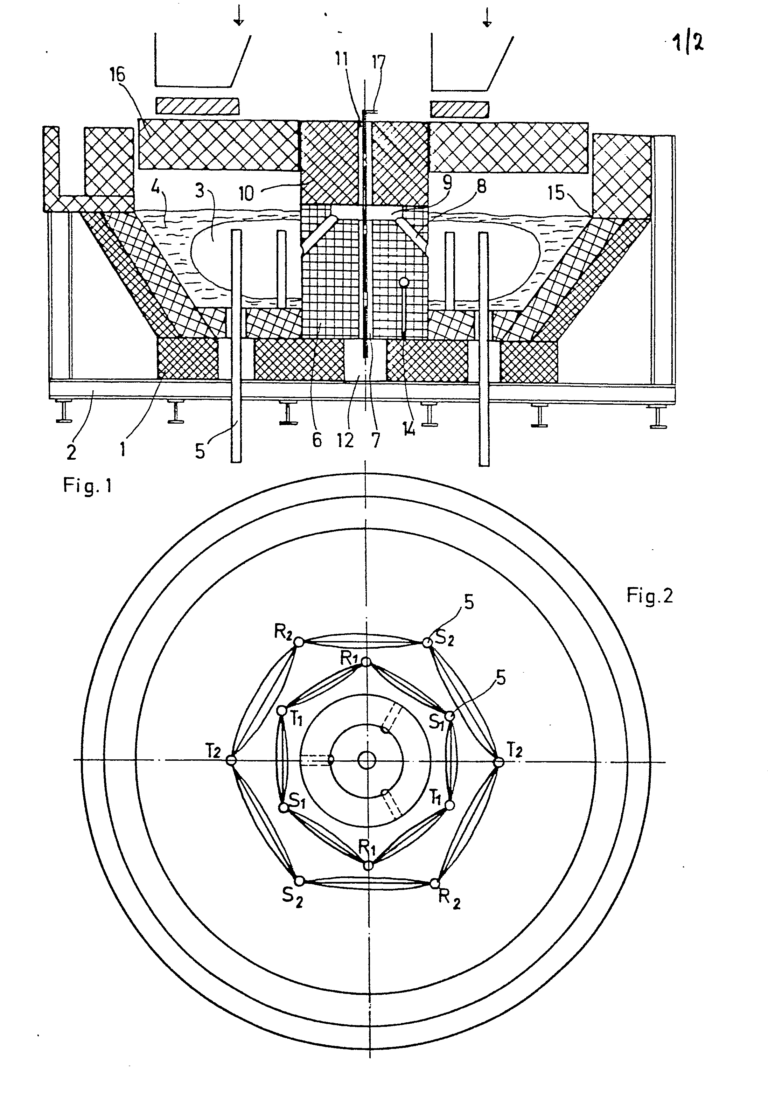

Figur 1    einen erfindungsgemäßen Ofen schematisch im Vertikalschnitt,

Figur 2    einen schematischen Schnitt durch den Ofen gemäß Figur 1 in einer Horizontalebene und

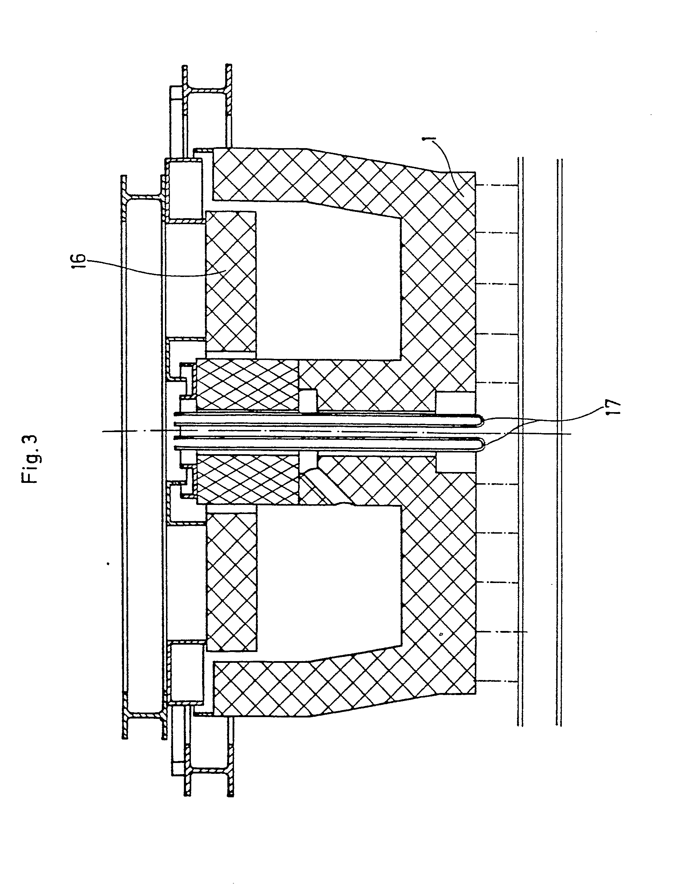

Figur 3    schematisch einen Schnitt zur Darstellung der Konstruktion des Mittelauslasses des Ofens.

Die erfindungsgemäße Schmelzwanne wird im wesentlichen mit denjenigen Wandungsteilen, die mit der Schmelze oder dem erweichten Gemenge in Berührung kommen, aus Magnesit-Chromsteinen aufgebaut, falls nicht ein Chrom-Osyd-Stein verwendet wird. Es hat sich gezeigt, daß diese Materialien bei Einhaltung einer nicht zu hoch angesetzten Temperatur, d. h. bei Temperaturen von nicht mehr als 1350 - 1400$^{o}$ C eine genügende Standzeit aufweisen, um einen befriedigenden Ofenbetrieb aufrecht zu erhalten. Erfindungswesentlich ist es dabei aber, daß der Elektrodenabstand zu den Wänden in jedem Fall ausreichend gewählt wird, um zu gewährleisten, daß an der Wand eine kalte Schmelze bzw. ein kaltes Glas, evtl. sogar eine auskristallisierte Phase gebildet wird.

Im erfindungsgemäßen Zusammenhang kann die Schmelze auch als Gals bezeichnet werden, da ein sehr hoher Glasanteil des erschmolzenen Gemenges vorliegt.

Der Vorgang des Ausbildens einer kühlen Zone an den Wandungen und oberhalb des Ofenbodens wird dadurch unterstützt, daß mit Hilfe der Drehdecke zur Aufgabe des Gemenges das weitaus meiste Material an der äußeren Peripherie aufgegeben wird, so daß, wenn es zum Erweichen im Randbereich kommt, das darüberliegende Material sofort nachdrückt und dieser Bereich wieder

-5-

mit ungeschmolzenem Material gefüllt wird.

Aufgrund der steilen Viskositätskurve der Schmelze ist zum Auslaß des Glases in der Wannenmitte ein Turm aus Chrom-Oxyd-Steinen eingesetzt, welcher aus Einzelblöcken aufgebaut und danach aufgebohrt worden ist. Der Turm bzw. Auslaß 6 weist neben dem mittleren, vertikal verlaufenden Mitteldurchlaß 7 eine Anzahl von schräg außen nach oben innen verlaufenden Kanälen 8 auf, die in der Mittelbohrung enden.

Auf diese Weise wird verhindert, daß etwa ungeschmolzenes Material mit der Schmelze aus der Gemengedecke abgezogen wird. Erfindungsgemäß kann aber eine gewisse Menge ungeschmolzenem Materials, etwa bis max. 5 % mit der Schmelze abgezogen werden.

Der erfindungsgemäße Schmelzofen ist in konventioneller Weise aufgebaut, d. h. das Mauerwerk der Ofenwandung und des Ofenbodens wird von einem äußeren Stützgerüst aus geeigneten Eisen- und Stahlträgern gehalten. Das Mauerwerk wird dabei mit 1 und das Stützgerüst mit 2 bezeichnet. Innerhalb des Ofens liegt der Bereich der Schmelze 3 vor, auf welchen das Gemenge 4 aufgelegt worden ist. Die Elektroden 5 sind in einem oder mehreren konzentrischen Ringen rings um den Auslaß 6 angeordnet, sie durchstoßen den Ofenboden und ragen im erheblichem Umfang, mehr als die Hälfte der Höhe der Schmelze in diese hinein. Da bei den Elektroden der Bereich der höchsten Energiedichte an ihren Spitzen vorliegt, wird damit gewährleistet, daß die meiste Energie in den Bereichen fern von dem Ofenboden und den Materialien der Wandung und des Auslasses freigesetzt wird, daß also die notwendige hohe Schmelztemperatur hier erreicht wird und die Wandmaterialien noch genügend thermisch abgeschirmt sind. Das Gemenge bzw. die Schmelze bilden also eine Schutzschicht mit nach außen sinkender Temperatur, so daß die Wandtemperatur die zulässigen Werte nirgendwo überschreitet. Der Auslaß selbst, der aus Chrom-Oxyd-Steinen besteht, kann dabei thermisch höher belastet werden als die genannten Magnesit-Chrom-Steine, aus denen vorzugsweise die Ofenwand und der Ofenboden bestehen.

Die eingesetzten Elektroden 5 weisen einen relativ großen Durchmesser von 60 - 80 mm auf und sind mit einer Innenkühlung versehen, wie sie ansich bekannt ist. Die Elektrodenschaltung ist dabei so, daß nebeneinander Elektroden verschiedener Phasen angeordnet sind, so daß der Hauptstromfluß immer von einer Elektrode zu der dieser benachbarten erfolgt. Durch diese Maßnahme wird die Energie praktisch in konzentrischen Ringen rings um den Durchlaß frei, um den Durchlaßbereich thermisch zu entlasten.

Um die genügend hohe Schmelztemperatur der Schmelze einzustellen, ist die gesamte freie Oberfläche der Schmelze mit einer Gemengeschicht bedeckt. Um zu verhindern, daß der Anteil des nicht geschmolzenen Materials beim Abzug zu groß wird, weist daher der Mitteldurchlaß die genannten schrägen Kanäle 8 auf, die in der Mittelbohrung 17 enden, so daß ein Überströmen von Material bzw. ein Eindringen des Gemenges von oben sicher verhindert wird.

Über die schrägen Kanäle gelangt jetzt ausschließlich geschmolzenes Material aus dem Schmelzbereich in den Auslaß 6 und durch den Unterrand des Mitteldurchlasses 7 regelt sich der Glasstand bzw. Schmelzenstand in dem Ofen automatisch, ohne daß ein Speiser und eine Glasstandsanzeige notwendig würden. Über den freiliegenden Überlauf läuft vielmehr so viel geschmolzenes Material ab, wie in dem Ofen erschmolzen wird. Die Badtiefe der Wanne ist dabei so groß, daß am Boden wie an den Wänden eine kalte Phase, evtl. eine Auskristallisierung des Materials zur Einstellung einer Isolationsschicht stattfindet.

Durch die Anordnung der Elektroden in zwei Ringen kann die Strömung von der Mitte weg oder zur Mitte hin beeinflußt werden, falls die inneren Elektroden stärker mit elektrischer Energie beaufschlagt werden, ergibt es dort eine stärkere Aufströmung, so daß Oberflächenglas vom Zentrum der Wanne fortgedrückt wird. Dadurch läßt sich in gewisser Weise das Schwimmen des Gemenges zur Mitte hin oder zum Rand hin steuern.

Weiterhin kann dadurch erreicht werden, daß bei den äußeren Elektroden die Temperatur niedriger liegt, so daß Material dort nur angeschmolzen wird, während bei dem inneren Elektrodenring die endgültige Aufschmelzung erfolgt.

Um in dem Mitteldurchlaß 7 die für das Ausströmen des geschmolzenen Gemenges erforderliche Temperatur einstellen zu können, ohne daß der Auslaß 6 überhitzt, sind unten in dem Auslaß 6 Gas- oder Ölbrenner 13 angeordnet, die seitlich von dem durchfließenden Material in einer Öffnung 12 in dem Feuerfestmaterial sitzen. In dem Auslaß 6 sind weiterhin mit Kühlmittel durchflossene Leitungen 14 vorhanden, die die Temperatur auf einem vorgegebenen Bereich halten. In einer weiteren Ausgestaltung des Auslasses werden Heizelemente 17 von oben in diesen gehängt.

Der Ofen selbst wird nach oben von einer Drehdecke 16 abgeschlossen. Da der Auslaufteil durch die Drehdecke ragt, kann nach Absenken des Schmelzpegels eine Reparatur oder Inspektion des Auslasses 6 ohne Schwierigkeiten vorgenommen werden. Dieser Teil ist thermisch am meisten belastet und wird daher ggf. am häufigsten zu reparieren oder auszuwechseln sein. Die Drehdecke 16

-8-

weist im übrigen in bekannter Weise, wie dies z. B. in der Anmeldung 78 200 395.8 im Detail beschrieben ist, Mittel zum Auflegen des Gemenges auf die Badoberfläche an gewünschten Stellen in beliebiger Menge auf. Diese Mittel bestehen aus Zwischenförderern und Bunkern, aus denen durch in der Decke angeordnete, abgedeckte Öffnungen das Gemenge aufgegeben wird. Die Drehdecke dreht sich kontinuierlich um eine vertikale Achse oberhalb des Gemenges, so daß jede der Öffnungen einen zur Drehachse konzentrischen Kreis überstreicht und durch das Mengenverhältnis des Gemenges in den verschiedenen Kreisbereichen kann eine beliebige Gemengeaufgabe auf die Gemengedecke erfolgen. Hinsichtlich der Einzelheiten wird ausdrücklich auf die genannte europäische Patentanmeldung verwiesen.

Mit dem erfindungsgemäßen Ofen wird erstmalig die Möglichkeit eröffnet, auch sehr schwer zu schmelzende Gemische, die hoch aggressiv sind und sehr steile Viskositätskurven aufweisen, in wirtschaftlicher Weise zu schmelzen. Damit wird eine Möglichkeit gegeben, das Grundmaterial zur Weiterverarbeitung zu Zement aus Flugasche, Kalk und evtl. Sand zu schaffen.

1

Patentansprüche

1. Elektrisch beheizter Schmelzofen zum Schmelzen von insbesondere aggressiven Mineralstoffen mit steilen Viskositätskurven, mit einem von einem Stützgerüst gehaltenem Mauerwerk aus feuerfestem Material und Elektroden zur Einleitung von elektrischer Energie in die Schmelze und Mitteln zum Auflegen des Gemenges auf die Schmelze, dadurch gekennzeichnet, daß die Elektroden (5) mit erheblicher Länge in die Schmelze (3) ragen und in der Wannenmitte ein mit einem Mitteldurchlaß (7) versehener Auslaß (6) angeordnet ist, der nach oben durch die Schmelze (3) ragt und dessen Auslaufoberkante sich bis dicht unter die Badoberfläche erstreckt.

2. Schmelzofen nach Anspruch 1, dadurch gekennzeichnet, daß der Ofen einen Grundriß in Form eines Kreises oder regelmäßigen Vielecks mit hoher Eckenzahl aufweist und die Ofenwandungen im Bereich der Schmelze von unten nach oben schräg nach außen und darüber senkrecht verlaufen.

3. Schmelzofen nach Anspruch 1 oder 2, dadurch gekennzeichnet, daß der Auslaß (6) in seinem oberen Bereich von außen nach innen schräg nach oben verlaufende Kanäle (8) aufweist, die oben dicht unterhalb der Badoberfläche in den Mitteldurchlaß (7) münden.

4. Schmelzofen nach Anspruch 3, dadurch gekennzeichnet, daß der Auslauf mit der Mittelbohrung bis über die Ofendecke hinausragt.

5. Schmelzofen nach Anspruch 4, dadurch gekennzeichnet, daß der Auslauf eine Öffnung (11) aufweist, durch welche hängende Heizelemente (17) bis zum unteren Auslaufende hindurch geführt sind.

6. Schmelzofen nach Anspruch 1 bis 5, gekennzeichnet, durch kühlmitteldurchflossene Leitungen (14) innerhalb des Auslasses (6).

7. Schmelzofen nach Anspruch 1 bis 6, dadurch gekennzeichnet, daß die Elektroden (5) durch den Wannenboden ragen und in mindestens zwei konzentrischen Ringen zum Auslaß (6) mit erheblichem Abstand zu diesem und der Außenwandung angeordnet sind.

8. Schmelzofen nach Anspruch 1 bis 7, dadurch gekennzeichnet, daß der Ofen von einer sich drehenden Decke (16) abgedeckt wird, die Öffnungen und Mitteil aufweist, um das Gemenge (4) auf die Schmelze (3) nach den Erfordernissen verteilt aufzugeben.

9. Schmelzofen nach Anspruch 8, dadurch gekennzeichnet, daß die Drehdecke (16) oberhalb des Auslasses eine Öffnung aufweist.

Fig. 1

Fig. 2

Fig. 3

0019004

**Europäisches Patentamt**

# EUROPÄISCHER RECHERCHENBERICHT

Nummer der Anmeldung

EP 79 10 1448

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 082 839</u> (CLERC DE BUSSY) <br> * Seite 4, Zeile 25 bis Seite 5, Zeile 10; Figur 1 * <br><br> -- | 1-3,6 |
| | <u>US - A - 3 964 892</u> (FERRO CORP.) <br> * Spalte 1, die zwei letzten Abschnitte; Figur 1 * <br><br> -- | 1,2,8 |
| | <u>US - A - 3 085 124</u> (UPTON) <br> * Spalte 1, Zeile 56 bis Zeile 63; Figur 2 * <br><br> -- | 3 |
| | <u>US - A - 3 328 153</u> (AUGSBURGER) <br> * Spalte 3, letzter Abschnitt; Spalte 4, erster Abschnitt; Figuren 1,4 * <br><br> -- | 7 |
| A | <u>DE - C - 709 409</u> (SLAYTER) <br> * Seite 3, Zeilen 81 bis 100; Figur 2 * <br><br> -- | 1 |
| A | <u>DE - C - 492 776</u> (CORNELIUS) <br> * Seite 2, Zeilen 8 bis 22; Figuren * <br><br> -- | 1 |
| A | <u>FR - A - 2 112 327</u> (V.E.B. KOMBINAT ILMENAU) <br> * Seite 8, Zeilen 5 bis 23; Figur 2 * <br><br> -- ./.. | 1 |

### KLASSIFIKATION DER ANMELDUNG (Int Cl. 3)

C 03 B 5/027
            7/08
H 05 B 3/60

### RECHERCHIERTE SACHGEBIETE (Int. Cl. 3)

H 05 B   3/60
            3/00
F 27 D 11/04
C 03 B   5/027
            7/08
            5/26
C 04 B   7/44

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-08-1980 | RAUSCH |

EPA form 1503.1   06.78

Europäisches
Patentamt

**EUROPÄISCHER RECHERCHENBERICHT**

Nummer der Anmeldung

EP 79 10 1448

| | EINSCHLÄGIGE DOKUMENTE | | KLASSIFIKATION DER ANMELDUNG (Int Cl. ³) |
|---|---|---|---|
| Kategorie | Kennzeichnung des Dokuments mit Angabe, soweit erforderlich, der maßgeblichen Teile | betrifft Anspruch | |
| A | <u>DE - A - 2 426 328</u> (SORG) <br> * Seite 5, Abschnitte 2 bis 4; Figur 1 * | 1 | |
| | | | |
| | ------- | | |
| | | | RECHERCHIERTE SACHGEBIETE (Int. Cl. ³) |